# EUROPEAN PATENT APPLICATION

(11) **EP 3 211 932 A1**
(43) Date of publication of application: **30.08.2017**
(21) Application number: 14906826.4
(22) Date of filing: 29.11.2014
(51) Int. Cl.: H04W 12/06, G06F 21/32

(54) **IDENTITY AUTHENTICATION METHOD AND WEARABLE DEVICE**

(71) Applicant: Huawei Technologies Co., Ltd., Longgang District Shenzhen, Guangdong 518129 (CN)
(72) Inventor: LI, Yan, Shenzhen, Guangdong 518129 (CN); ZHU, Yu, Shenzhen, Guangdong 518129 (CN)
(74) Representative: Pfenning, Meinig & Partner mbB
(86) International application number: PCT/CN2014/092622
(87) International publication number: WO 2016/082229

(57) **Abstract**

Embodiments of the present invention disclose an identity authentication method and a wearable device. The method includes: when a wearable device connects to a first terminal, obtaining and detecting, by the wearable device, identification information of the first terminal; when the wearable device detects that the identification information of the first terminal is different from stored identification information of a second terminal, obtaining identity information of a user, and authenticating the identity information of the user; and if the identity authentication succeeds, running, by the wearable device, in an administrator mode; or if the identity authentication fails, running, by the wearable device, in a non-administrator mode. In the identity authentication method of the embodiments of the present invention, identity authentication may be performed on a terminal interacting with the wearable device, thereby improving security of user data on the wearable device, and enhancing user experience.

## Description

### TECHNICAL FIELD

The present invention relates to the field of communications, and in particular, to an identity authentication method and a wearable device.

### BACKGROUND

A wearable device is a portable device that is directly worn on the body or integrated into clothes or an accessory of a user. The wearable device is a hardware device that implements multiple functions by means of software support, data exchange, and cloud interaction. A process in which the wearable device interacts with a terminal does not involve a security mechanism of user data. Therefore, there are many potential troubles in data security when a user uses the wearable device. For example, when the terminal interacting with the wearable device is changed, if a former user does not clean user data (such as short message service messages or call records) on the wearable device, a latter user may directly view the user data left by the former user, and personal privacy of the former user is not protected. For another example, when a same user uses a new terminal to interact with the wearable device, the user cannot obtain user data of an old terminal, leading to relatively poor user experience.

### SUMMARY

Embodiments of the present invention provide an identity authentication method and a wearable device. In the method, identity authentication may be performed on a terminal interacting with the wearable device, to improve security of user data on the wearable device.

According to a first aspect, an embodiment of the present invention provides an identity authentication method, including:
when a wearable device connects to a first terminal, obtaining and detecting, by the wearable device, identification information of the first terminal;
when the wearable device detects that the identification information of the first terminal is different from stored identification information of a second terminal, obtaining identity information of a user, and authenticating the identity information of the user; and
if the identity authentication succeeds, running, by the wearable device, in an administrator mode; or
if the identity authentication fails, running, by the wearable device, in a non-administrator mode.

With reference to the first aspect, in a first possible implementation manner of the first aspect, before the obtaining and detecting, by the wearable device, identification information of the first terminal, the method includes:
pre-establishing, by the wearable device, a connection to the second terminal, obtaining and storing the identification information of the second terminal, and setting rights of the second terminal to administrator rights.

With reference to the first possible implementation manner of the first aspect, in a second possible implementation manner of the first aspect, the pre-establishing, by the wearable device, a connection to the second terminal includes:
pre-establishing, by the wearable device, the connection to the second terminal by means of wireless connection, where the wireless connection includes: a Bluetooth connection, an infrared connection, a ZigBee connection, and a WiFi connection.

With reference to the first aspect, in a third possible implementation manner of the first aspect, the method includes:
when the wearable device detects that the identification information of the first terminal is the same as the stored identification information of the second terminal, prompting the user to perform identity authentication.

With reference to the first aspect, in a fourth possible implementation manner of the first aspect, the method further includes:
if the wearable device detects that the identification information of the first terminal is different from the stored identification information of the second terminal, running, by the wearable device, in the non-administrator mode.

With reference to the first aspect, in a fifth possible implementation manner of the first aspect, the identity authentication includes:
one or more of biological feature authentication, password authentication, or gesture authentication.

With reference to the first possible implementation manner of the first aspect, in a sixth possible implementation manner of the first aspect, the pre-establishing, by the wearable device, a connection to the second terminal, obtaining and storing the identification information of the second terminal, and setting rights of the second terminal to administrator rights includes:
obtaining and storing, by the wearable device, authentication information corresponding to the identification information of the second terminal, and prompting the user to set the rights of the second terminal to the administrator rights; and
generating, by the wearable device, account information according to the authentication information, storing the account information, and setting the rights of the second terminal to the administrator rights.

With reference to the sixth possible implementation manner of the first aspect, in a seventh possible implementation manner of the first aspect, the method further includes:
obtaining, by the second terminal, the account information, and sending the account information to a cloud end;
creating, by the cloud end, an account to store binding information between the account information and ID information of the wearable device;
sending, by the wearable device, the account information to an APP end, and obtaining, by the APP end, the account information and requesting a cloud server for authentication and synchronization with historical data of the cloud end;
after the authentication succeeds, sending, by the cloud end, the account information to the second terminal; and
when the first terminal has the administrator rights, synchronizing data included in the administrator rights from the cloud end to the first terminal.

With reference to the sixth possible implementation manner of the first aspect, in an eighth possible implementation manner of the first aspect, the method further includes:
creating, by the wearable device, a rights table, where the rights table records the identification information of the second terminal and rights corresponding to the second terminal.

With reference to the eighth possible implementation manner of the first aspect, in a ninth possible implementation manner of the first aspect, the method further includes:
if the rights corresponding to the second terminal are the administrator rights, storing the rights corresponding to the second terminal; and
if the rights corresponding to the second terminal are non-administrator rights, prompting the user to perform identity authentication.

With reference to the first aspect, in a tenth possible implementation manner of the first aspect, the method further includes:
obtaining and detecting, by the wearable device, the identification information of the first terminal, and prompting the user to perform identity authentication.

According to a second aspect, an embodiment of the present invention further provides a wearable device, including:
an obtaining unit, configured to: when the wearable device connects to a first terminal, obtain and detect identification information of the first terminal;
a first determining unit, configured to: when the wearable device detects that the identification information of the first terminal is different from stored identification information of a second terminal, obtain identity information of a user, and authenticate the identity information of the user; and
a first executing unit, configured to: if the identity authentication succeeds, enable the wearable device to run in an administrator mode; or
a second executing unit, configured to: if the identity authentication fails, enable the wearable device to run in a non-administrator mode.

With reference to the second aspect, in a first possible implementation manner of the second aspect, before the obtaining unit, the wearable device includes:
a setting unit, configured to: pre-establish a connection to the second terminal, obtain and store the identification information of the second terminal, and set rights of the second terminal to administrator rights.

With reference to the first possible implementation manner of the second aspect, in a second possible implementation manner of the second aspect, the setting unit is configured to:
pre-establish the connection to the second terminal by means of wireless connection, where the wireless connection includes: a Bluetooth connection, an infrared connection, a ZigBee connection, and a WiFi connection.

With reference to the second aspect, in a third possible implementation manner of the second aspect, the wearable device includes:
when the wearable device detects that the identification information of the first terminal is the same as the stored identification information of the second terminal, prompt the user to perform identity authentication.

With reference to the second aspect, in a fourth possible implementation manner of the second aspect, the wearable device further includes:
a third executing unit, configured to: if it is detected that the identification information of the first terminal is different from the stored identification information of the second terminal, enable the wearable device to run in the non-administrator mode.

With reference to the second aspect, in a fifth possible implementation manner of the second aspect, the identity authentication includes:
one or more of biological feature authentication, password authentication, or gesture authentication.

With reference to the first possible implementation manner of the second aspect, in a sixth possible implementation manner of the second aspect, the setting unit includes:
a first obtaining module, configured to: obtain and store authentication information corresponding to the identification information of the second terminal, and prompt the user to set the rights of the second terminal to the administrator rights; and
a setting module, configured to generate account information according to the authentication information, store the account information, and set the rights of the second terminal to the administrator rights.

With reference to the sixth possible implementation manner of the second aspect, in a seventh possible implementation manner of the second aspect, the wearable device further includes:
a second obtaining module, configured to obtain, by the second terminal, the account information, and send the account information to a cloud end;
a storing module, configured to create, by the cloud end, an account to store binding information between the account information and ID information of the wearable device; and
a synchronization module, configured to send, by the wearable device, the account information to an APP end, obtain, by the APP end, the account information and request a cloud server for authentication and synchronization with historical data of the cloud end, and after the authentication succeeds, send, by the cloud end, the account information to the second terminal; and
when the first terminal has the administrator rights, synchronize data included in the administrator rights from the cloud end to the first terminal.

With reference to the sixth possible implementation manner of the second aspect, in an eighth possible implementation manner of the second aspect, the wearable device further includes:
a first creating module, configured to create, by the wearable device, a rights table, where the rights table records the identification information of the second terminal and rights corresponding to the second terminal.

With reference to the eighth possible implementation manner of the second aspect, in a ninth possible implementation manner of the second aspect, the wearable device further includes:
a first processing module, configured to: if the rights corresponding to the second terminal are the administrator rights, store the rights corresponding to the second terminal; and
a second processing module, configured to: if the rights corresponding to the second terminal are non-administrator rights, prompt the user to perform identity authentication.

With reference to the second aspect, in a tenth possible implementation manner of the second aspect, the wearable device further includes:
a fourth executing unit, configured to: obtain and detect, by the wearable device, the identification information of the first terminal, and prompt the user to perform identity authentication.

According to a third aspect, an embodiment of the present invention further provides a computer storage medium, where the computer storage medium may store a program, and when the program is executed, some or all steps of any one of the methods in the first aspect may be performed.

In the identity authentication method and the wearable device of the embodiments of the present invention, identity authentication may be performed on a terminal interacting with the wearable device, thereby improving security of user data on the wearable device, and enhancing user experience.

### BRIEF DESCRIPTION OF DRAWINGS

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of an identity authentication method according to a first embodiment of the present invention;
FIG. 2 is a schematic flowchart of an identity authentication method according to a second embodiment of the present invention;
FIG. 3 is a schematic diagram of a rights table according to the second embodiment of the present invention;
FIG. 4 is a schematic structural diagram of a wearable device according to a first embodiment of the present invention;
FIG. 5 is a schematic structural diagram of a wearable device according to a second embodiment of the present invention; and

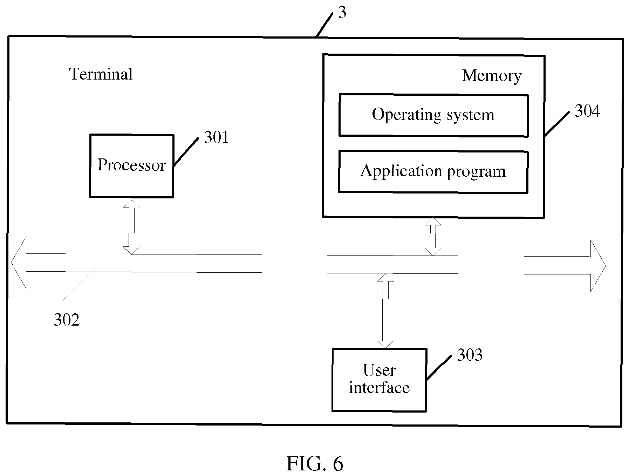

FIG. 6 is a schematic structural diagram of a wearable device according to a third embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

In a specific implementation, a terminal described in the embodiments of the present invention may include a mobile phone, a tablet computer, a personal stereo, or the like, and a wearable device described in the embodiments of the present invention may include a smart watch, a smart band, a smart ring, or the like. The terminals and the wearable devices above are merely examples and are not for an exhaustive purpose. The present invention includes but is not limited to the terminals and the wearable devices above.

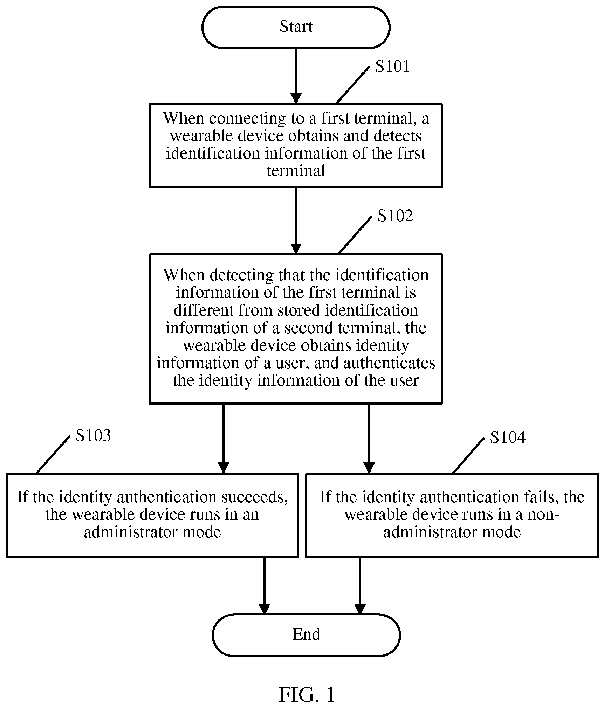

Referring to FIG. 1, FIG. 1 is a schematic flowchart of an identity authentication method according to a first embodiment of the present invention. The method specifically includes the following steps.

S101: When connecting to a first terminal, a wearable device obtains and detects identification information of the first terminal.

Specifically, when the wearable device connects to the first terminal, the wearable device and the first terminal separately record and store ID information of the other side. The ID information in this embodiment of the present invention refers to unique information that can identify the identity of the device, for example, information such as a Bluetooth address. It needs to be known that when the wearable device detects the identification information of the first terminal, the identification information may be detected according to the previously stored ID information of the first terminal, or may be obtained and detected in real time when or after a connection is established.

It should be understood that the wearable device establishes the connection to the first terminal by means of wireless connection, where the wireless connection includes: a Bluetooth connection, an infrared connection, a ZigBee connection, a WiFi connection, and the like.

S102: When detecting that the identification information of the first terminal is different from stored identification information of a second terminal, the wearable device obtains identity information of a user, and authenticates the identity information of the user.

Specifically, the wearable device pre-establishes a connection to the second terminal, obtains and stores the identification information of the second terminal, and sets rights of the second terminal to administrator rights. When detecting that the obtained ID information of the first terminal is different from the information that is obtained in advance and that is of the second terminal having the administrator rights, the wearable device prompts the user to perform identity authentication. In some optional implementation manners, a method for the identity authentication includes: one or more of biological feature authentication, password authentication, or gesture authentication. The biological authentication may include collecting signals of the user such as electrocardiosignals, voiceprints, fingerprints, irises, facial recognition, or electromyographic signals to authenticate the user identity. The password authentication may include a character string password. The gesture authentication may include setting a gesture password.

It should be understood that the first terminal and the second terminal may be a same terminal. When detecting that the identification information of the first terminal is the same as the stored identification information of the second terminal, the wearable device prompts the user to perform identity authentication. That is, when the same terminal interacts with the wearable device again, identity authentication may also be performed, thereby enhancing security of using the wearable device by the user.

Certainly, when the wearable device obtains and detects the identification information of the first terminal, the wearable device may not determine whether the identification information of the first terminal is the same as the identification information of the second terminal, but directly prompt the user to perform identity authentication, thereby ensuring that user data of the second terminal is not leaked.

If detecting that the identification information of the first terminal is different from the stored identification information of the second terminal, the wearable device may directly enter a non-administrator mode, thereby ensuring that the user data of the second terminal is not leaked.

S103: If the identity authentication succeeds, the wearable device runs in an administrator mode.

Specifically, when the identity authentication succeeds, the wearable device stores the identification information of the first terminal, and determines that the first terminal has the administrator rights. The wearable device opens data to the first terminal.

S104: If the identity authentication fails, the wearable device runs in a non-administrator mode.

Specifically, when the identity authentication fails, the wearable device determines that the first terminal has non-administrator rights. In this case, the wearable device isolates the user data of the second terminal, that is, the user data of the second terminal cannot be viewed by using the first terminal.

It needs to be known that when the wearable device detects that the identification information of the first terminal is different from the stored identification information of the second terminal, the user may choose not to perform identity authentication, and the wearable device directly enters the non-administrator mode.

In the identity authentication method and the wearable device of this embodiment of the present invention, identity authentication may be performed on a terminal interacting with the wearable device, thereby improving security of user data on the wearable device, and enhancing user experience.

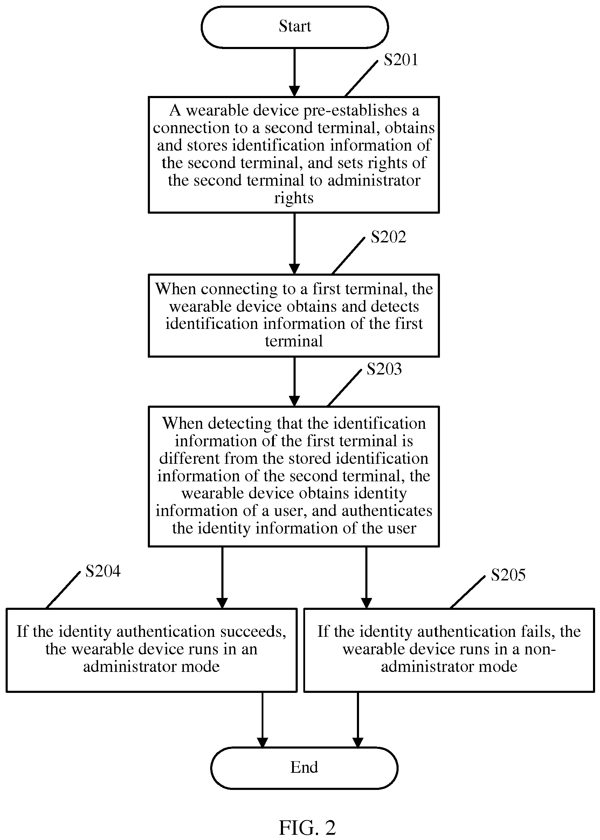

Referring to FIG. 2, FIG. 2 is a schematic flowchart of an identity authentication method according to a second embodiment of the present invention. The method specifically includes the following steps.

S201: A wearable device pre-establishes a connection to a second terminal, obtains and stores identification information of the second terminal, and sets rights of the second terminal to administrator rights.

Specifically, the wearable device may pre-establish the connection to the second terminal by means of wireless connection, where the wireless connection includes: a Bluetooth connection, an infrared connection, a ZigBee connection, a WiFi connection, and the like.

The wearable device obtains and stores authentication information corresponding to the identification information of the second terminal, and prompts the user to set the rights of the second terminal to the administrator rights. The wearable device generates account information according to the authentication information, stores the account information, and sets the rights of the second terminal to the administrator rights.

In some optional implementation manners, the second terminal obtains the account information, binds the account information to ID information of the wearable device, and sends the bound information to a cloud end for storage. When the second terminal is changed to the first terminal during ID authentication, the bound information may be extracted from the cloud end for confirmation.

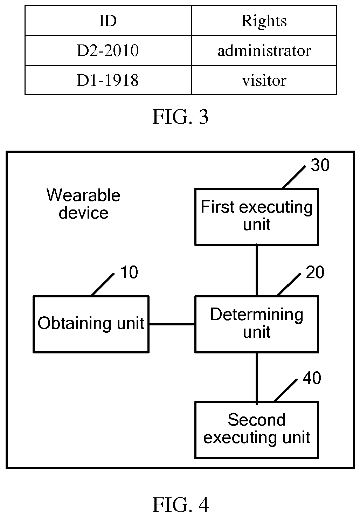

In some optional implementation manners, the wearable device may create a rights table, where the rights table records the identification information of the second terminal and rights corresponding to the second terminal. Referring to FIG. 3, FIG. 3 is a schematic diagram of a rights table according to the second embodiment of the present invention. For example, the second terminal is D2-2010, and rights of D2-2010 are the administrator rights, and the first terminal is D1-1918, and rights of D1-1918 are non-administrator rights. When the wearable device establishes a connection to D1-1918, the wearable device obtains ID information of D1-1918 and searches the stored rights table. If the ID information of D1-1918 does not exist in the rights table, identity authentication is performed on D1-1918. According to an authentication result, the wearable device may update the rights table in real time, that is, add the ID information of D1-1918 and rights corresponding to the ID information to the rights table for storage. If the ID information of D1-1918 exists in the rights table, the wearable device determines, according to rights information corresponding to the ID information of D1-1918, whether to enter an authentication mode. That is, if the rights corresponding to the ID information of D1-1918 in the rights table are the non-administrator rights, D1-1918 automatically enters an identity authentication mode. If the rights corresponding to the ID information of D1-1918 in the rights table are the administrator rights, D1-1918 stores the rights information without identity authentication.

In some feasible implementation manners, the terminal may also have an administrator mode and a non-administrator mode. The wearable device may store the rights corresponding to the second terminal. When the terminal for connecting to the wearable device is changed, the wearable device may request to authenticate whether the rights of the terminal are consistent with the stored rights. For example, the wearable device establishes a connection to the first terminal selected by the user, and the wearable device detects identification information of the first terminal. If the wearable device detects that the identification information of the first terminal is different from the ID information of the terminal having the administrator rights, the wearable device triggers the authentication mode and authenticates an identity of the user so as to allocate corresponding access rights. The wearable device requests to obtain access rights of the current user on the first terminal, and the first terminal sends the access rights of the current user on the first terminal to the wearable device. The wearable device determines access rights of the user on the wearable device according to an authentication result of the user identity and the obtained access rights of the user on the first terminal. For example:

If the wearable device detects that the first terminal is not the second terminal, the wearable device directly enters a non-administrator mode, to isolate information of the second terminal from information of the first terminal. The wearable device sends a non-administrator mode message to an APP end of the first terminal, and the APP determines the non-administrator mode and temporarily stores user activity data locally.

If the wearable device detects that the first terminal is the second terminal, and the access rights of the user on the first terminal are the administrator rights, the wearable device enters an administrator mode. The wearable device sends authenticated user information to an APP end of a mobile phone. The APP end obtains account information of the user and requests a cloud server for authentication and synchronization with historical data of the cloud end. After the authentication succeeds, the cloud end sends the user data to the first terminal so as to complete the synchronization. If the wearable device detects that the first terminal is the second terminal, but the access rights of the user are the non-administrator mode, the wearable device enters the non-administrator mode to isolate administrator data.

Certainly, the user may choose not to perform identity authentication, and directly enter the non-administrator mode to access the wearable device.

Preferably, if the wearable device detects that the first terminal has the non-administrator rights, the wearable device directly enters the non-administrator mode, to isolate the information of the second terminal from the information of the first terminal. If the wearable device detects that the first terminal has the administrator rights, the wearable device determines that the first terminal is an administrator terminal, enters the administrator mode, and adds an ID of the first terminal to an administrator rights table. Alternatively, if the wearable device detects that the first terminal has the administrator rights, the wearable device enters the administrator mode, and the wearable device does not add the ID of the first terminal to the administrator rights table. Certainly, in an optional implementation manner of this embodiment of the present invention, the user may choose not to perform identity authentication, and directly enter the non-administrator mode to access the wearable device.

Certainly, in an optional implementation manner of this embodiment of the present invention, the user may choose not to perform identity authentication, and directly enter the non-administrator mode to access the wearable device.

In some feasible implementation manners, the wearable device may obtain and store identity information of a first user, and determine whether the wearable device enters a worn state from an unworn state. The wearable device obtains information of a second user. When the information of the second user is the same as the identity information of the first user, the wearable device runs in the administrator mode. When the information of the second user is different from the identity information of the first user, the wearable device runs in the non-administrator mode.

It needs to be known that the worn state indicates that the wearable device is worn by the user, and the unworn state indicates that the wearable device is taken off by the user. The method of detecting whether the wearable device is in the worn state may be detecting by means of a hardware design of a smart watch, or detecting by means of a sensor, such as a temperature sensor, a light sensor, or a motion sensor. The wearable device has a relatively high temperature when in the worn state due to contact with skin, and has a relatively low temperature when in the unworn state. Alternatively, the method may be detecting by using hardware and a sensor feature value. For example, when it is detected that a buckle of the wearable device is open and a temperature sensor detects no body temperature value of a human body, it is determined that the smart watch is in the unworn state.

S202: When connecting to a first terminal, the wearable device obtains and detects identification information of the first terminal.

Specifically, when the wearable device connects to the first terminal, the wearable device and the first terminal separately record and store ID information of the other side. The ID information in this embodiment of the present invention refers to unique information that can identify the identity of the device, for example, information such as a Bluetooth address. It needs to be known that when the wearable device detects the identification information of the first terminal, the identification information may be detected according to the previously stored ID information of the first terminal, or may be obtained and detected in real time when or after a connection is established.

It should be understood that the wearable device establishes the connection to the first terminal by means of wireless connection, where the wireless connection includes: a Bluetooth connection, an infrared connection, a ZigBee connection, and a WiFi connection.

S203: When detecting that the identification information of the first terminal is different from the stored identification information of the second terminal, the wearable device obtains identity information of a user, and authenticates the identity information of the user.

Specifically, the wearable device pre-establishes the connection to the second terminal, obtains and stores the identification information of the second terminal, and sets the rights of the second terminal to the administrator rights. When detecting that the obtained ID information of the first terminal is different from the information that is obtained in advance and that is of the second terminal having the administrator rights, the wearable device prompts the user to perform identity authentication. In some optional implementation manners, a method for the identity authentication includes: one or more of biological feature authentication, password authentication, or gesture authentication. The biological feature authentication may include collecting signals of the user such as electrocardiosignals, voiceprints, fingerprints, irises, facial recognition, or electromyographic signals to authenticate the user identity. The password authentication may include a character string password. The gesture authentication may include setting a gesture password.

It should be understood that the first terminal and the second terminal may be a same terminal. That is, when the same terminal interacts with the wearable device again, identity authentication may also be performed, thereby enhancing security of using the wearable device by the user.

Certainly, when the wearable device obtains and detects the identification information of the first terminal, the wearable device may not determine whether the identification information of the first terminal is the same as the identification information of the second terminal, but directly prompt the user to perform identity authentication, thereby ensuring that user data of the second terminal is not leaked.

If detecting that the identification information of the first terminal is different from the stored identification information of the second terminal, the wearable device may directly enter a non-administrator mode, thereby ensuring that the user data of the second terminal is not leaked.

S204: If the identity authentication succeeds, the wearable device runs in an administrator mode.

Specifically, when the identity authentication succeeds, the wearable device stores the identification information of the first terminal, and determines that the first terminal has the administrator rights. The wearable device opens data to the first terminal.

S205: If the identity authentication fails, the wearable device runs in a non-administrator mode.

Specifically, when the identity authentication fails, the wearable device determines that the first terminal has non-administrator rights. In this case, the wearable device isolates the user data of the second terminal, so that the user data of the second terminal cannot be viewed by using the first terminal.

It needs to be known that when the wearable device detects that the identification information of the first terminal is different from the stored identification information of the second terminal, the user may choose not to perform identity authentication, and the wearable device directly enters the non-administrator mode.

In the identity authentication method and the wearable device of this embodiment of the present invention, identity authentication may be performed on a terminal interacting with the wearable device, thereby improving security of user data on the wearable device, and enhancing user experience.

Referring to FIG. 4, FIG. 4 is a schematic structural diagram of a wearable device according to a first embodiment of the present invention. The wearable device includes an obtaining unit 10, a first determining unit 20, a first executing unit 30, and a second executing unit 40.

The obtaining unit 10 is configured to: when the wearable device connects to a first terminal, obtain and detect identification information of the first terminal.

Specifically, when the wearable device connects to the first terminal, the wearable device and the first terminal separately record and store ID information of the other side. The ID information in this embodiment of the present invention refers to unique information that can identify the identity of the device, for example, information such as a Bluetooth address. It needs to be known that when the wearable device detects the identification information of the first terminal, the identification information may be detected according to the previously stored ID information of the first terminal, or may be obtained and detected in real time when or after a connection is established.

It should be understood that the wearable device establishes the connection to the first terminal by means of wireless connection, where the wireless connection includes: a Bluetooth connection, an infrared connection, a ZigBee connection, and a WiFi connection.

The first determining unit 20 is configured to: when it is detected that the identification information of the first terminal is different from stored identification information of a second terminal, prompt a user to perform identity authentication.

Specifically, the wearable device pre-establishes a connection to the second terminal, obtains and stores the identification information of the second terminal, and sets rights of the second terminal to administrator rights. When detecting that the obtained ID information of the first terminal is different from the information that is obtained in advance and that is of the second terminal having the administrator rights, the wearable device prompts the user to perform identity authentication. In some optional implementation manners, a method for the identity authentication includes: one or more of biological feature authentication, password authentication, or gesture authentication. The biological feature authentication may include collecting signals of the user such as electrocardiosignals, voiceprints, fingerprints, irises, facial recognition, or electromyographic signals to authenticate the user identity. The password authentication may include a character string password. The gesture authentication may include setting a gesture password.

It should be understood that the first terminal and the second terminal may be a same terminal. That is, when the same terminal interacts with the wearable device again, identity authentication may also be performed, thereby enhancing security of using the wearable device by the user.

Certainly, when the wearable device obtains and detects the identification information of the first terminal, the wearable device may not determine whether the identification information of the first terminal is the same as the identification information of the second terminal, but directly prompt the user to perform identity authentication, thereby ensuring that user data of the second terminal is not leaked.

If detecting that the identification information of the first terminal is different from the stored identification information of the second terminal, the wearable device may directly enter a non-administrator mode, thereby ensuring that the user data of the second terminal is not leaked.

The first executing unit 30 is configured to: if the identity authentication succeeds, enable the wearable device to run in an administrator mode.

Specifically, when the identity authentication succeeds, the wearable device stores the identification information of the first terminal, and determines that the first terminal has the administrator rights. The wearable device opens data to the first terminal.

The second executing unit 40 is configured to: if the identity authentication fails, enable the wearable device to run in a non-administrator mode.

Specifically, the wearable device pre-establishes the connection to the second terminal, obtains and stores the identification information of the second terminal, and sets the rights of the second terminal to the administrator rights. When detecting that the obtained ID information of the first terminal is different from the information that is obtained in advance and that is of the second terminal having the administrator rights, the wearable device prompts the user to perform identity authentication. In some optional implementation manners, a method for the identity authentication includes: one or more of biological feature authentication, password authentication, or gesture authentication. The biological feature authentication may include collecting signals of the user such as electrocardiosignals, voiceprints, fingerprints, irises, facial recognition, or electromyographic signals to authenticate the user identity. The password authentication may include a character string password. The gesture authentication may include setting a gesture password.

It should be understood that the first terminal and the second terminal may be a same terminal. That is, when the same terminal interacts with the wearable device again, identity authentication may also be performed, thereby enhancing security of using the wearable device by the user.

Certainly, when the wearable device obtains and detects the identification information of the first terminal, the wearable device may not determine whether the identification information of the first terminal is the same as the identification information of the second terminal, but directly prompt the user to perform identity authentication, thereby ensuring that user data of the second terminal is not leaked.

If detecting that the identification information of the first terminal is different from the stored identification information of the second terminal, the wearable device may directly enter the non-administrator mode, thereby ensuring that the user data of the second terminal is not leaked.

Specifically, when the identity authentication fails, the wearable device determines that the first terminal has non-administrator rights. In this case, the wearable device isolates the user data of the second terminal, that is, the user data of the second terminal cannot be viewed by using the first terminal.

It needs to be known that when the wearable device detects that the identification information of the first terminal is different from the stored identification information of the second terminal, the user may choose not to perform identity authentication, and the wearable device directly enters the non-administrator mode.

The wearable device of this embodiment of the present invention may perform identity authentication on a terminal interacting with the wearable device, thereby improving security of user data on the wearable device, and enhancing user experience.

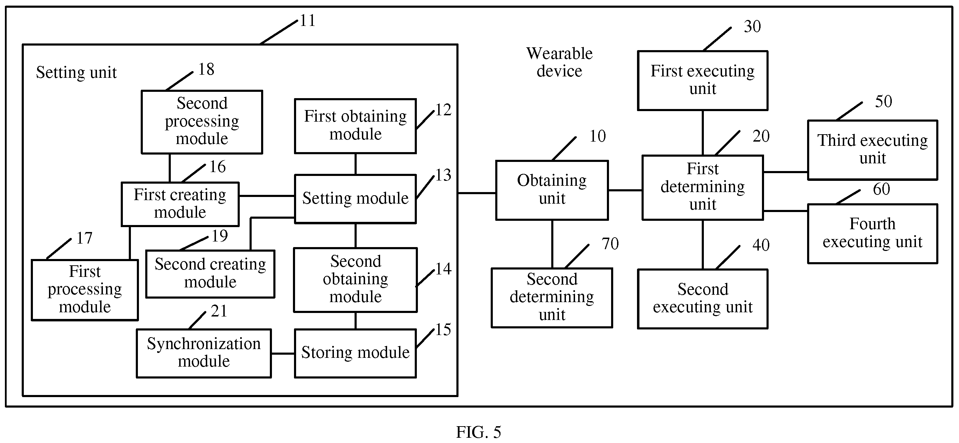

Referring to FIG. 5, FIG. 5 is a schematic structural diagram of a wearable device according to a second embodiment of the present invention. The wearable device shown in FIG. 5 is obtained by optimizing the wearable device shown in FIG. 4. In addition to the units included in the wearable device shown in FIG. 4, before the obtaining unit 10, the wearable device shown in FIG. 5 includes a setting unit 11, where the setting unit 11 includes: a first obtaining module 12, a setting module 13, a second obtaining module 14, a storing module 15, a first creating module 16, a first processing module 17, a second processing module 18, a second creating module 19, and a synchronization module 21. In addition, the wearable device further includes: a third executing unit 50, a fourth executing unit 60, and a second determining unit 70.

The setting unit 11 is configured to: pre-establish a connection to the second terminal, obtain and store the identification information of the second terminal, and set rights of the second terminal to administrator rights.

The setting unit 11 includes:
the first obtaining module 12, configured to: obtain and store authentication information corresponding to the identification information of the second terminal, and prompt the user to set the rights of the second terminal to the administrator rights; and
the setting module 13, configured to generate account information according to the authentication information, store the account information, and set the rights of the second terminal to the administrator rights.

Specifically, the wearable device may pre-establish the connection to the second terminal by means of wireless connection, where the wireless connection includes: a Bluetooth connection, an infrared connection, a ZigBee connection, and a WiFi connection.

The wearable device obtains and stores authentication information corresponding to the identification information of the second terminal, and prompts the user to set the rights of the second terminal to the administrator rights. The wearable device generates account information according to the authentication information, stores the account information, and sets the rights of the second terminal to the administrator rights.

The second obtaining module 14 is configured to obtain, by the second terminal, the account information, and send the account information to a cloud end.

The storing module 15 is configured to create, by the cloud end, an account to store binding information between the account information and ID information of the wearable device.

The synchronization module 21 is configured to send, by the wearable device, the account information to an APP end, obtain, by the APP end, the account information and request a cloud server for authentication and synchronization with historical data of the cloud end, and after the authentication succeeds, send, by the cloud end, the account information to the second terminal.

In some optional implementation manners, the second terminal obtains the account information, binds the account information to ID information of the wearable device, and sends the bound information to the cloud end for storage. When the second terminal is changed to the first terminal during ID authentication, the bound information may be extracted from the cloud end for confirmation.

The first creating module 16 is configured to create, by the wearable device, a rights table, where the rights table records the identification information of the second terminal and rights corresponding to the second terminal.

The first processing module 17 is configured to: if the rights corresponding to the second terminal are the administrator rights, store the rights corresponding to the second terminal.

The second processing module 18 is configured to: if the rights corresponding to the second terminal are non-administrator rights, prompt the user to perform identity authentication.

The second creating module 19 is configured to: create, by the wearable device, the rights table, and if the rights table does not record the identification information of the second terminal and the rights corresponding to the second terminal, prompt the user to perform identity authentication.

In some optional implementation manners, the wearable device may create the rights table, where the rights table records the identification information of the second terminal and rights corresponding to the second terminal. Referring to FIG. 3, FIG. 3 is a schematic diagram of a rights table according to the second embodiment of the present invention. For example, the second terminal is D2-2010, and rights of D2-2010 are the administrator rights, and the first terminal is D1-1918, and rights of D1-1918 are non-administrator rights. When the wearable device establishes a connection to D1-1918, the wearable device obtains ID information of D1-1918 and searches the stored rights table. If the ID information of D1-1918 does not exist in the rights table, identity authentication is performed on D1-1918. According to an authentication result, the wearable device may update the rights table in real time, that is, add the ID information of D1-1918 and rights corresponding to the ID information to the rights table for storage. If the ID information of D1-1918 exists in the rights table, the wearable device determines, according to rights information corresponding to the ID information of D1-1918, whether to enter an authentication mode. That is, if the rights corresponding to the ID information of D1-1918 in the rights table are the non-administrator rights, D1-1918 automatically enters an identity authentication mode. If the rights corresponding to the ID information of D1-1918 in the rights table are the administrator rights, D1-1918 stores the rights information without identity authentication.

In some feasible implementation manners, the terminal may also have an administrator mode and a non-administrator mode. The wearable device may store the rights corresponding to the second terminal. When the terminal for connecting to the wearable device is changed, the wearable device may request to authenticate whether the rights of the terminal are consistent with the stored rights. For example, the wearable device establishes a connection to the first terminal selected by the user, and the wearable device detects the identification information of the first terminal. If the wearable device detects that the identification information of the first terminal is different from the ID information of the terminal having the administrator rights, the wearable device triggers the authentication mode and authenticates an identity of the user so as to allocate corresponding access rights. The wearable device requests to obtain access rights of the current user on the first terminal, and the first terminal sends the access rights of the current user on the first terminal to the wearable device. The wearable device determines access rights of the user on the wearable device according to an authentication result of the user identity and the obtained access rights of the user on the first terminal. For example:

If the wearable device detects that the first terminal is not the second terminal, the wearable device directly enters a non-administrator mode, to isolate information of the second terminal from information of the first terminal. The wearable device sends a non-administrator mode message to an APP end of the first terminal, and the APP determines the non-administrator mode and temporarily stores user activity data locally.

If the wearable device detects that the first terminal is the second terminal, and the access rights of the user on the first terminal are the administrator rights, the wearable device enters an administrator mode. The wearable device sends authenticated user information to an APP end of a mobile phone. The APP end obtains account information of the user and requests a cloud server for authentication and synchronization with historical data of the cloud end. After the authentication succeeds, the cloud end sends the user data to the first terminal so as to complete the synchronization. If the wearable device detects that the first terminal is the second terminal, but the access rights of the user are the non-administrator mode, the wearable device enters the non-administrator mode to isolate administrator data.

Certainly, the user may choose not to perform identity authentication, and directly enter the non-administrator mode to access the wearable device.

Preferably, if the wearable device detects that the first terminal has the non-administrator rights, the wearable device directly enters the non-administrator mode, to isolate the information of the second terminal from the information of the first terminal. If the wearable device detects that the first terminal has the administrator rights, and access rights of the wearable device on the first terminal are the administrator rights, the wearable device determines that the first terminal is an administrator terminal, enters the administrator mode, and adds an ID of the first terminal to an administrator rights table. Alternatively, if the wearable device detects that the first terminal has the administrator rights, the wearable device enters the administrator mode, and the wearable device does not add the ID of the first terminal to the administrator rights table. Certainly, in an optional implementation manner of this embodiment of the present invention, the user may choose not to perform identity authentication, and directly enter the non-administrator mode to access the wearable device.

In some feasible implementation manners, the wearable device may obtain and store identity information of a first user, and determine whether the wearable device enters a worn state from an unworn state. The wearable device obtains information of a second user. When the information of the second user is the same as the identity information of the first user, the wearable device runs in the administrator mode. When the information of the second user is different from the identity information of the first user, the wearable device runs in the non-administrator mode.

It needs to be known that the worn state indicates that the wearable device is worn by the user, and the unworn state indicates that the wearable device is taken off by the user. The method of detecting whether the wearable device is in the worn state may be detecting by means of a hardware design of a smart watch, or detecting by means of a sensor, such as a temperature sensor, a light sensor, or a motion sensor. The wearable device has a relatively high temperature when in the worn state due to contact with skin, and has a relatively low temperature when in the unworn state. Alternatively, the method may be detecting by using hardware and a sensor feature value. For example, when it is detected that a buckle of the wearable device is open and a temperature sensor detects no body temperature value of a human body, it is determined that the smart watch is in the unworn state.

The third executing unit 50 is configured to: when it is detected that the identification information of the first terminal is different from the stored identification information of the second terminal, directly enter the non-administrator mode.

The fourth executing unit 60 is configured to: obtain and detect, by the wearable device, the identification information of the first terminal, and prompt the user to perform identity authentication.

The second determining unit 70 is configured to: when the wearable device detects that the identification information of the first terminal is the same as the stored identification information of the second terminal, prompt the user to perform identity authentication.

Certainly, when the wearable device obtains and detects the identification information of the first terminal, the wearable device may not determine whether the identification information of the first terminal is the same as the identification information of the second terminal, but directly prompt the user to perform identity authentication, thereby ensuring that user data of the second terminal is not leaked.

In some feasible implementation manners, the second terminal may also have an administrator mode and a non-administrator mode. The wearable device may store the rights corresponding to the second terminal. When the terminal for connecting to the wearable device is changed, the wearable device may request to authenticate whether the rights of the terminal are consistent with the stored rights. For example, the wearable device establishes a connection to the first terminal selected by the user, and the wearable device detects the identification information of the first terminal. If the wearable device detects that the identification information of the first terminal is different from the ID information of the terminal having the administrator rights, the wearable device triggers the authentication mode and authenticates an identity of the user so as to allocate corresponding access rights. The wearable device requests to obtain access rights of the current user on the first terminal, and the first terminal sends the access rights of the current user on the first terminal to the wearable device. The wearable device determines access rights of the user on the wearable device according to an authentication result of the user identity and the obtained access rights of the user on the first terminal.

If the wearable device detects that the first terminal is not the second terminal, the wearable device directly enters a non-administrator mode, to isolate information of the second terminal from information of the first terminal. The wearable device sends a non-administrator mode message to an APP end of the first terminal, and the APP determines the non-administrator mode and temporarily stores user activity data locally.

If the wearable device detects that the first terminal is the second terminal, and the access rights of the user on the first terminal are the administrator rights, the wearable device enters an administrator mode. The wearable device sends authenticated user information to an APP end of a mobile phone. The APP end obtains account information of the user and requests a cloud server for authentication and synchronization with historical data of the cloud end. After the authentication succeeds, the cloud end sends the user data to the first terminal, so as to complete the synchronization. If the wearable device detects that the first terminal is the second terminal, but the access rights of the user are the non-administrator mode, the wearable device enters the non-administrator mode to isolate administrator data.

Certainly, the user may choose not to perform identity authentication, and directly enter the non-administrator mode to access the wearable device.

Preferably, if the wearable device detects that the first terminal has the non-administrator rights, the wearable device directly enters the non-administrator mode, to isolate the information of the second terminal from the information of the first terminal. If the wearable device detects that the first terminal has the administrator rights, and the access rights of the wearable device on the first terminal are the administrator rights, the wearable device determines that the first terminal is an administrator terminal, enters the administrator mode, and adds an ID of the first terminal to an administrator rights table. Alternatively, if the wearable device detects that the first terminal has the administrator rights, the wearable device enters the administrator mode, and the wearable device does not add the ID of the first terminal to the administrator rights table. Certainly, in an optional implementation manner of this embodiment of the present invention, the user may choose not to perform identity authentication, and directly enter the non-administrator mode to access the wearable device.

In the identity authentication method and the wearable device of this embodiment of the present invention, identity authentication may be performed on a terminal interacting with the wearable device, thereby improving security of user data on the wearable device, and enhancing user experience.

Referring to FIG. 5, FIG. 5 is a schematic structural diagram of a wearable device according to a third embodiment of the present invention. The wearable device includes at least one processor 301 such as a CPU, a memory 304, at least one user interface 303, and at least one communications bus 302, where the communications bus 302 is configured to implement connection and communication between the components. The user interface 303 may include a display (Display), a keyboard (Keyboard), and optionally, the user interface 303 may further include a standard wired interface and wireless interface. The memory 304 may be a high-speed RAM memory, or a non-volatile memory (non-volatile memory), such as at least one magnetic disk storage. The memory 304 may be optionally at least one storage Apparatus that is located far away from the processor 301.

The processor 301 may be combined with the wearable device described in FIG. 4 and FIG. 5. The memory 304 stores a set of program code. The processor 301 invokes the program code stored in the memory 304 to perform the following operations:
when the wearable device connects to a first terminal, obtaining and detecting, by the wearable device, identification information of the first terminal;
when the wearable device detects that the identification information of the first terminal is different from stored identification information of a second terminal, obtaining identity information of a user, and authenticating the identity information of the user; and
if the identity authentication succeeds, running, by the wearable device, in an administrator mode; or
if the identity authentication fails, running, by the wearable device, in a non-administrator mode.

In an optional embodiment, the processor 301 may invoke the program code stored in the memory 304 to further perform the following operation:
before the obtaining and detecting, by the wearable device, identification information of the first terminal,
pre-establishing, by the wearable device, a connection to the second terminal, obtaining and storing the identification information of the second terminal, and setting rights of the second terminal to administrator rights.

In an optional embodiment, the processor 301 may invoke the program code stored in the memory 304 to further perform the following operation:
pre-establishing, by the wearable device, the connection to the second terminal by means of wireless connection, where the wireless connection includes: a Bluetooth connection, an infrared connection, a ZigBee connection, and a WiFi connection.

In an optional embodiment, the processor 301 may invoke the program code stored in the memory 304 to further perform the following operation:
when the wearable device detects that the identification information of the first terminal is the same as the stored identification information of the second terminal, prompting the user to perform identity authentication.

In an optional embodiment, the processor 301 may invoke the program code stored in the memory 304 to further perform the following operation:
if the wearable device detects that the identification information of the first terminal is different from the stored identification information of the second terminal, running, by the wearable device, in the non-administrator mode.

In an optional embodiment, the processor 301 may invoke the program code stored in the memory 304 to further perform the following operation:
the identity authentication includes:
   one or more of biological feature authentication, password authentication, or gesture authentication.

In an optional embodiment, the processor 301 may invoke the program code stored in the memory 304 to further perform the following operations:
the pre-establishing, by the wearable device, a connection to the second terminal, obtaining and storing the identification information of the second terminal, and setting rights of the second terminal to administrator rights includes:
   obtaining and storing, by the wearable device, authentication information corresponding to the identification information of the second terminal, and prompting the user to set the rights of the second terminal to the administrator rights; and
   generating, by the wearable device, account information according to the authentication information, storing the account information, and setting the rights of the second terminal to the administrator rights.

In an optional embodiment, the processor 301 may invoke the program code stored in the memory 304 to further perform the following operations:
obtaining, by the second terminal, the account information, and sending the account information to a cloud end;
creating, by the cloud end, an account to store binding information between the account information and ID information of the wearable device;
sending, by the wearable device, the account information to an APP end; and obtaining, by the APP end, the account information and requesting a cloud server for authentication and synchronization with historical data of the cloud end;
after the authentication succeeds, sending, by the cloud end, the account information to the second terminal; and
when the first terminal has the administrator rights, synchronizing data included in the administrator rights from the cloud end to the first terminal.

In an optional embodiment, the processor 301 may invoke the program code stored in the memory 304 to further perform the following operation:
creating, by the wearable device, a rights table, where the rights table records the identification information of the second terminal and rights corresponding to the second terminal.

In an optional embodiment, the processor 301 may invoke the program code stored in the memory 304 to further perform the following operations:
if the rights corresponding to the second terminal are the administrator rights, storing the rights corresponding to the second terminal; and
if the rights corresponding to the second terminal are non-administrator rights, prompting the user to perform identity authentication.

In an optional embodiment, the processor 301 may invoke the program code stored in the memory 304 to further perform the following operation:
creating, by the wearable device, the rights table, and if the rights table does not record the identification information of the second terminal and the rights corresponding to the second terminal, prompting the user to perform identity authentication.

In an optional embodiment, the processor 301 may invoke the program code stored in the memory 304 to further perform the following operation:
obtaining and detecting, by the wearable device, the identification information of the first terminal, and prompting the user to perform identity authentication.

Specifically, the terminal described in this embodiment may be configured to implement some or all procedures in the terminal embodiment described in the present invention with reference to FIG. 4 and FIG. 5, and details are not described herein again.

In the identity authentication method and the wearable device of this embodiment of the present invention, identity authentication may be performed on a terminal interacting with the wearable device, thereby improving security of user data on the wearable device, and enhancing user experience.

It should be understood that the first executing unit and the second executing unit do not indicate a sequence relationship, but to distinguishing different executing units. Similarly, the first obtaining module and the second module are to indicate different obtaining module, and details are not described herein again.

A person of ordinary skill in the art may understand that, each aspect of the present invention or a possible implementation manner of each aspect may be specifically implemented as a system, a method, or a computer program product. In addition, each aspect of the present invention or the possible implementation manner of each aspect may take a form of a computer program product, where the computer program product refers to computer-readable program code stored in a computer-readable medium.

The computer-readable medium may be a computer-readable data medium or a computer-readable storage medium. The computer-readable storage medium includes but is not limited to an electronic, magnetic, optical, electromagnetic, infrared, or semi-conductive system, device, or apparatus, or any appropriate combination thereof, such as a random access memory (RAM), a read-only memory (ROM), an erasable programmable read only memory (EPROM or flash memory), an optical fiber, and a compact disc read only memory (CD-ROM).

A processor in a computer reads computer-readable program code stored in a computer-readable medium, so that the processor can perform a function and an action specified in each step or a combination of steps in a flowchart; an apparatus is generated to implement a function and an action specified in each block or a combination of blocks in a block diagram.

All computer-readable program code may be executed on a user computer, or some may be executed on a user computer as a standalone software package, or some may be executed on a local computer of a user while some is executed on a remote computer, or all the code may be executed on a remote computer or a server. It should also be noted that, in some alternative implementation solutions, each step in the flowcharts or functions specified in each block in the block diagrams may not occur in the illustrated order. For example, two consecutive steps or two blocks in the illustration, which are dependent on an involved function, may in fact be executed substantially at the same time, or these blocks may sometimes be executed in reverse order.

Obviously, a person skilled in the art may make various modifications and variations to the present invention without departing from the spirit and scope of the present invention. The present invention is intended to cover these modifications and variations provided that they fall within the scope of protection defined by the following claims and their equivalent technologies.

## Claims

1. An identity authentication method, comprising:
when a wearable device connects to a first terminal, obtaining and detecting, by the wearable device, identification information of the first terminal;
when the wearable device detects that the identification information of the first terminal is different from stored identification information of a second terminal, obtaining identity information of a user, and authenticating the identity information of the user; and
if the identity authentication succeeds, running, by the wearable device, in an administrator mode; or
if the identity authentication fails, performing, by the wearable device, in a non-administrator mode.

2. The method according to claim 1, before the obtaining and detecting, by the wearable device, identification information of the first terminal, comprising:
pre-establishing, by the wearable device, a connection to the second terminal, obtaining and storing the identification information of the second terminal, and setting rights of the second terminal to administrator rights.

3. The method according to claim 2, wherein the pre-establishing, by the wearable device, a connection to the second terminal comprises:
pre-establishing, by the wearable device, the connection to the second terminal by means of wireless connection, wherein the wireless connection manner comprises: a Bluetooth connection, an infrared connection, a ZigBee connection, and a WiFi connection.

4. The method according to claim 1,
when the wearable device detects that the identification information of the first terminal is the same as the stored identification information of the second terminal, prompting the user to perform identity authentication.

5. The method according to claim 1, further comprising:
if the wearable device detects that the identification information of the first terminal is different from the stored identification information of the second terminal, running, by the wearable device, in the non-administrator mode.

6. The method according to claim 1, wherein the identity authentication comprises:
one or more of biological feature authentication, password authentication, or gesture authentication.

7. The method according to claim 2, wherein the pre-establishing, by the wearable device, a connection to the second terminal, obtaining and storing the identification information of the second terminal, and setting rights of the second terminal to administrator rights comprises:
obtaining and storing, by the wearable device, authentication information corresponding to the identification information of the second terminal, and prompting the user to set the rights of the second terminal to the administrator rights; and
generating, by the wearable device, account information according to the authentication information, storing the account information, and setting the rights of the second terminal to the administrator rights.

8. The method according to claim 7, further comprising:
obtaining, by the second terminal, the account information, and sending the account information to a cloud end;
creating, by the cloud end, an account to store binding information between the account information and ID information of the wearable device;
sending, by the wearable device, the account information to an APP end, and obtaining, by the APP end, the account information and requesting a cloud server for authentication and synchronization with historical data of the cloud end;
after the authentication succeeds, sending, by the cloud end, the account information to the second terminal; and
when the first terminal has the administrator rights, synchronizing data comprised in the administrator rights from the cloud end to the first terminal.

9. The method according to claim 7, further comprising:
creating, by the wearable device, a rights table, wherein the rights table records the identification information of the second terminal and rights corresponding to the second terminal.

10. The method according to claim 9, further comprising:
if the rights corresponding to the second terminal are the administrator rights, storing the rights corresponding to the second terminal; and
if the rights corresponding to the second terminal are non-administrator rights, prompting the user to perform identity authentication.

11. The method according to claim 9, further comprising:
creating, by the wearable device, the rights table, and if the rights table does not record the identification information of the second terminal and the rights corresponding to the second terminal, prompting the user to perform identity authentication.

12. The method according to claim 1, further comprising:
obtaining and detecting, by the wearable device, the identification information of the first terminal, and prompting the user to perform identity authentication.

13. A wearable device, comprising:
an obtaining unit, configured to: when the wearable device connects to a first terminal, obtain and detect identification information of the first terminal;
a first determining unit, configured to: when the wearable device detects that the identification information of the first terminal is different from stored identification information of a second terminal, obtain identity information of a user, and authenticate the identity information of the user; and
a first executing unit, configured to: if the identity authentication succeeds, enable the wearable device to run in an administrator mode; or
a second executing unit, configured to: if the identity authentication fails, enable the wearable device to perform in a non-administrator mode.

14. The wearable device according to claim 13, before the obtaining unit, comprising:
a setting unit, configured to: pre-establish a connection to the second terminal, obtain and store the identification information of the second terminal, and set rights of the second terminal to administrator rights.

15. The wearable device according to claim 14, wherein the setting unit comprises:
pre-establish the connection to the second terminal by means of wireless connection, wherein the wireless connection comprises: a Bluetooth connection, an infrared connection, a ZigBee connection, and a WiFi connection.

16. The wearable device according to claim 13,
a second determining unit, configured to: when the wearable device detects that the identification information of the first terminal is the same as the stored identification information of the second terminal, prompt the user to perform identity authentication.

17. The wearable device according to claim 13, further comprising:
a third executing unit, configured to: if it is detected that the identification information of the first terminal is different from the stored identification information of the second terminal, enable the wearable device to perform in the non-administrator mode.

18. The wearable device according to claim 13, the identity authentication comprises:
one or more of biological feature authentication, password authentication, or gesture authentication.

19. The wearable device according to claim 14, wherein the setting unit comprises:
a first obtaining module, configured to: obtain and store authentication information corresponding to the identification information of the second terminal, and prompt the user to set the rights of the second terminal to the administrator rights; and
a setting module, configured to generate account information according to the authentication information, store the account information, and set the rights of the second terminal to the administrator rights.

20. The wearable device according to claim 19, further comprising:
a second obtaining module, configured to obtain, by the second terminal, the account information, and send the account information to a cloud end;
a storing module, configured to create, by the cloud end, an account to store binding information between the account information and ID information of the wearable device;
a synchronization module, configured to send, by the wearable device, the account information to an APP end, obtain, by the APP end, the account information and request a cloud server for authentication and synchronization with historical data of the cloud end, and after the authentication succeeds, send, by the cloud end, the account information to the second terminal; and
when the first terminal has the administrator rights, synchronize data comprised in the administrator rights from the cloud end to the first terminal.

21. The wearable device according to claim 19, further comprising:
a first creating module, configured to create, by the wearable device, a rights table, wherein the rights table records the identification information of the second terminal and rights corresponding to the second terminal.

22. The wearable device according to claim 21, further comprising:
a first processing module, configured to: if the rights corresponding to the second terminal are the administrator rights, store the rights corresponding to the second terminal; and
a second processing module, configured to: if the rights corresponding to the second terminal are non-administrator rights, prompt the user to perform identity authentication.

23. The method according to claim 21, further comprising:
a second creating module, configured to: create, by the wearable device, the rights table, and if the rights table does not record the identification information of the second terminal and the rights corresponding to the second terminal, prompt the user to perform identity authentication.

24. The wearable device according to claim 13, further comprising:
a fourth executing unit, configured to: obtain and detect, by the wearable device, the identification information of the first terminal, and prompt the user to perform identity authentication.

25. A computer storage medium, wherein the computer storage medium may store a program, and when the program is executed, some or all steps of the method according to any one of claims 1 to 12 may be performed.
